# FASCICULE DE BREVET EUROPEEN

(11) **EP 2 896 765 B1**
(45) Date de publication et mention de la délivrance du brevet: **27.07.2016**
(21) Numéro de dépôt: 15150375.2
(22) Date de dépôt: 07.01.2015
(51) Int. Cl.: E04H 12/10, E04H 12/34, F03D 13/20, F03D 1/00, E02B 17/00

(54) **Procédé de fabrication d'un pylône et dispositif pour ce faire**
Herstellungsverfahren eines Mastes, und dafür verwendete Vorrichtung
Method for manufacturing a pylon and device for same

(30) Priorité: 17.01.2014 FR 1450385
(43) Date de publication de la demande: 22.07.2015
(73) Titulaire: STX FRANCE S.A., 44600 Saint Nazaire (FR)
(72) Inventeur: Herpin, Sébastien, 44550 Montoir de Bretagne (FR); Boutron, Eric, 44350 Guérande (FR); Cerna, Mathieu, 44160 Besne (FR); Piquemal, Jean-Louis, 44600 Saint Marc sur Mer (FR)
(74) Mandataire: Regimbeau

(56) Documents cités:
- EP-A1- 2 511 423
- DE-U1-202006 008 770
- GB-A- 1 317 854

## Description

L'invention se rapporte à un procédé de fabrication d'un pylône, par exemple métallique, qui s'inscrit dans un tronc de pyramide droit à base carrée ou rectangulaire, et qui est formé d'un seul et unique tronçon ou de plusieurs tronçons assemblés les uns aux autres, chaque tronçon, également en forme de tronc de pyramide, étant formé de tubes matérialisant les arêtes dudit tronc de pyramide, ces tubes étant reliés deux à deux par une croix.

En langage du métier, pour désigner un tel pylône, on parle couramment de "structure en treillis".

En d'autres termes, une telle structure en treillis est constituée d'un assemblage de barres horizontales, sensiblement verticales et diagonales, qui consistent le plus souvent en des tubes.

Ces barres peuvent être assemblées selon différentes méthodes telles que le soudage pour des barres métalliques, ou par boulonnage, etc.

L'état de la technique en la matière est par exemple illustré par les documents EP 2 511 423 et DE 20 2006 008770.

Le pylône peut, par exemple, être destiné à une installation en mer (dite "offshore"), et servir de support au mât d'une éolienne.

Ces pylônes sont habituellement fabriqués en position horizontale.

Pour des pylônes de taille modeste, la première étape consiste habituellement à fabriquer l'une de ses faces à plat. Cette face est formée de deux tubes qui sont reliés l'un à l'autre par une croix. Bien entendu, les deux tubes ne sont pas parallèles. Ils forment avec la verticale un angle qui correspond à l'inclinaison de chaque face du tronc de pyramide.

Par le terme de "croix", on entend une pièce en forme de croix de Saint André, qui est le plus souvent constituée d'un assemblage de tubes.

Sur cette face ainsi construite, on positionne les croix des deuxième et troisième faces en les maintenant en position verticale.

Ensuite, la structure est en quelque sorte "fermée" par la mise en place de la dernière face en la positionnant sur le dessus du sous ensemble déjà érigé.

Les pylônes de grande taille sont eux aussi fabriqués en position horizontale. Leur méthode de fabrication diffère de celle qui vient d'être décrite. Leurs faces sont fabriquées à plat puis mises en position verticale.

Toutefois, quelle que soit la taille du pylône, ces méthodes de fabrication nécessitent toutes un accès en hauteur pour pouvoir assembler, notamment souder entre eux les différents sous-ensembles qui le composent.

Il est clair que cette méthodologie est perfectible en termes de sécurité (travail en hauteur), mais également en termes de qualité, de délai de réalisation et de coûts.

La présente invention vise donc à atteindre ce but, principalement en évitant le travail en hauteur.

Ainsi, selon un premier aspect de l'invention, celle-ci se rapporte à un procédé de fabrication d'un pylône qui s'inscrit dans un tronc de pyramide droit à base carrée ou rectangulaire, et qui est formé d'un seul et unique tronçon ou de plusieurs tronçons assemblés les uns aux autres, chaque tronçon, également en forme de tronc de pyramide, étant formé de tubes matérialisant les arêtes dudit tronc de pyramide, ces tubes, qui sont inclinés par rapport à la verticale d'un angle α₁ étant reliés deux à deux par au moins une croix, caractérisé par le fait qu'il comprend, pour la réalisation d'un tronçon, la mise en oeuvre des étapes suivantes :
a) assembler, dans un plan généralement horizontal, deux tubes et au moins une croix, pour former une "première face" du tronc de pyramide ;
b) répéter l'étape a) pour former une "deuxième face" du tronc de pyramide ;
c) positionner verticalement, selon l'angle d'inclinaison dudit tronc de pyramide par rapport à la verticale et exactement en regard l'une à l'autre, les première et deuxième faces obtenues aux étapes a) et b) ;
d) positionner et assembler une croix avec les tubes inférieurs des deux faces érigées verticalement, de manière à obtenir un sous-ensemble constitué de trois faces ;
e) procédé au levage et au retournement sur lui-même dudit sous-ensemble obtenu à l'étape d), de sorte que les deux tubes non encore réunis par une croix s'étendent en position basse ;
f) procéder à la mise en place et à l'assemblage de ladite croix sur lesdits tubes de manière à constituer la quatrième face du tronçon.

On comprend aisément que ces différentes étapes peuvent être mises en oeuvre au niveau du sol ou approximativement, les manoeuvres des croix, des faces et des sous-ensembles pouvant être réalisées en faisant usage de portiques, de grues ou de moyens équivalents.

Ce faisant, on rationalise le travail et on est gagnant en termes de sécurité des opérateurs.

Selon d'autres caractéristiques non limitatives et avantageuses de ce procédé, prises seules ou en combinaison :
- ledit pylône est constitué de plusieurs tronçons distincts, et l'on réitère l'ensemble des étapes précitées de manière à obtenir plusieurs tronçons que l'on assemble les uns aux autres pour former ledit pylône ;
- lors de la fabrication du tronçon inférieur, on met en place entre chaque paire de tubes, non loin de leur base, une traverse de jonction et de rigidification.

Un autre aspect de l'invention est relatif à un dispositif de fabrication d'un pylône qui s'inscrit dans un tronc de pyramide droit à base carrée ou rectangulaire, et qui est formé d'un seul et unique tronçon ou de plusieurs tronçons assemblés les uns aux autres, chaque tronçon, également en forme de tronc de pyramide, étant formé de tubes matérialisant les arêtes dudit tronc de pyramide, ces tubes, qui sont inclinés par rapport à la verticale d'un angle α₁ étant reliés deux à deux par une croix selon l'une des caractéristiques précédentes.

Ce dispositif est essentiellement remarquable en ce qu'il comporte deux paires de supports identiques, chaque support comportant un premier et un second éléments droits, fixés l'un à l'autre, qui forment l'un par rapport à l'autre un angle égal audit angle α₁, ces deux paires de supports étant destinées à recevoir l'une ou l'autre de ladite première et ladite deuxième faces et l'extrémité libre desdits éléments porte un manchon qui s'étend parallèlement à l'élément associé.

Selon d'autres caractéristiques non limitatives et avantageuses de ce dispositif :
- les éléments dudit support comportent de moyens de fixation des tubes ;
- il comporte un plateau sensiblement plan, à la surface duquel s'élèvent au moins deux paires de plots perpendiculaires audit plateau et sur lesquels lesdits manchons sont aptes à être positionnés ; et
- il comporte des rails le long desquels lesdits plots sont aptes à être déplacés, si nécessaire pour s'adapter à la dimension du pylône.

D'autres caractéristiques et avantages de l'invention apparaîtront à la lecture de la description détaillée qui va suivre. Elle sera faite en référence aux dessins annexés dans lesquels :
- la figure 1 est une vue très schématique et de face, d'un pylône que l'on se propose de construire conformément au procédé selon l'invention ;
- la figure 2 est une vue en perspective de la partie inférieure d'un tel pylône;
- la figure 3 est une vue en perspective d'un tronc de pyramide dans lequel s'inscrivent lesdits pylônes ;
- la figure 4 est une vue en perspective de deux supports identiques formant partie d'un dispositif pour la mise en oeuvre du procédé selon invention;
- la figure 5 est une vue en perspective des supports de la figure 5 sur lesquels on a fixé la première face d'un tronçon de pylône ;
- la figure 6 est aussi une vue en perspective d'un plateau formant partie dudit dispositif ;
- la figure 7 est une vue en perspective du plateau de la figure précédente, sur lequel on a érigé ladite première face ;
- les figures 8 à 13 sont des vues analogues à la précédente illustrant les autres étapes du procédé selon invention ;
- la figure 14 est une vue simplifiée et de face d'un autre mode de réalisation d'un pylône.

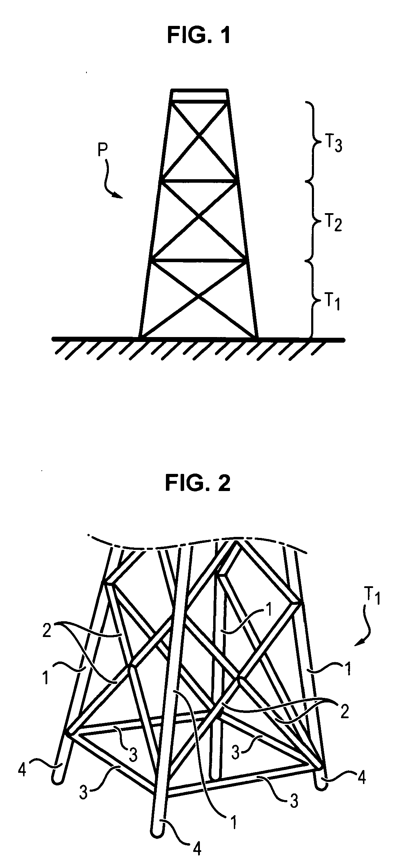

A la figure 1 annexée est représenté de manière très schématique un pylône que l'on se propose de construire conformément au procédé selon l'invention.

Un tel pylône P peut présenter une hauteur de plusieurs dizaines de mètres, et on a référencé par T₁, T₂ et T₃ trois tronçons qui le constituent. Bien entendu, le nombre de tronçons peut être différent de trois.

A la figure 2 est représentée plus précisément la partie inférieure d'un tel pylône, et on note qu'il présente une base carrée qui est délimitée et constituée de quatre tubes 3 formant les quatre côtés de ce carré, les angles de ce dernier étant rattachés à des pieds 4 qui se poursuivent par des tubes référencés 1 qui s'élèvent vers le haut selon un certain angle d'inclinaison.

Entre chaque paire de tubes 1 sont disposés des croix 2 qui donnent de la rigidité à ensemble.

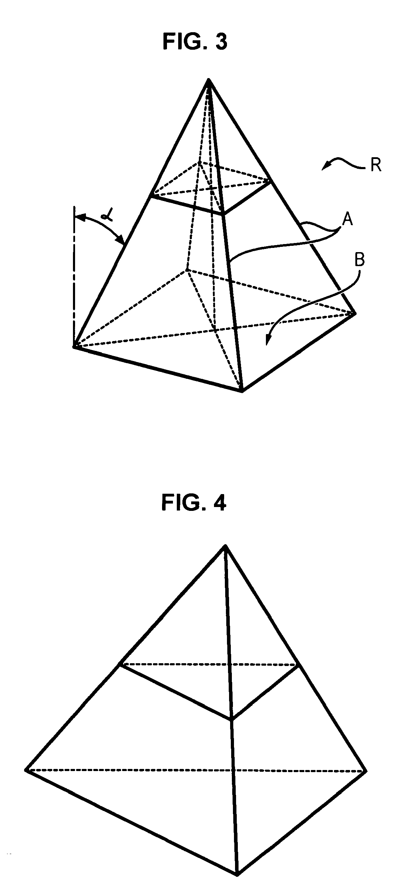

La figure 3 représente le tronc de pyramide dans lequel un tel pylône s'inscrit.

Ce tronc R présente une base B de forme carrée et ses arêtes sont référencées A.

De manière concrète, la base B est constituée de l'agencement des tubes 3 précités, tandis que les tubes 1 matérialisent les arêtes A.

Enfin, on a référencé α l'angle que forment les faces du tronc de pyramide par rapport à la verticale.

Bien entendu, on peut envisager de construire selon une architecture similaire, un pylône à base rectangulaire, et plus généralement, à base formant un quadrilatère régulier?

A la figure 4 sont représentés deux supports identiques 5 qui vont permettre, comme on le verra plus loin, de construire une première face du tronc de pyramide.

Ces supports 5 comprennent chacun un premier élément droit 50 formée d'une poutre métallique à section en H. A ce premier élément droit est fixé, sensiblement aux deux tiers de sa longueur, un second élément 51, du même type que le précédent. Le premier et le second éléments forment l'un par rapport à l'autre un angle égal à l'angle d'inclinaison des tubes 1, c'est-à-dire un angle α₁.

Dans un mode de réalisation non représenté, l'élément 50 pourrait s'interrompre juste au niveau de la base du second élément.

On notera que l'élément 50 comporte, à l'opposé du second élément, un manchon parallèle 52 en forme de tube cylindrique. Il présente un diamètre sensiblement égal à la hauteur de la poutre métallique qui constitue l'élément, de sorte qu'il ne déborde pas de part et d'autre de celui-ci.

Un manchon identique 52 équipe également le second élément 51.

Les deux manchons sont disposés de telle manière qu'ils ne dépassent pas au-delà de l'extrémité associée de l'élément 50, respectivement 51

Par ailleurs, des pièces de fixation 53 sont prévues sur la face supérieure des premier et second éléments.

Selon une première étape du procédé selon l'invention, on assemble, dans un plan généralement horizontal, deux tubes 1 et une croix 2 pour former une première face F1 du tronc de pyramide.

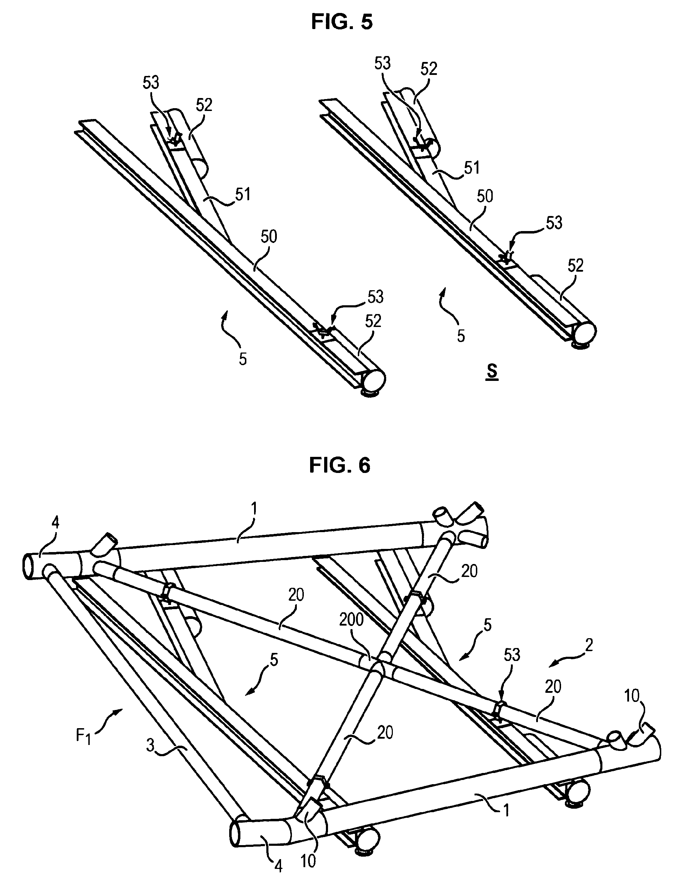

Plus précisément, et en référence à la figure 5, on positionne deux tubes 1 équipés de pieds 4, transversalement vis-à-vis des éléments 5 de manière à ce qu'ils reposent juste sur les extrémités de chacun des éléments 5. Les deux pieds 4 sont alors réunis par un tube rigidificateur 3. Leur assemblage se fait, par exemple, par emboîtement et soudage.

On notera que les tubes 1 sont pré-équipés de manchons tubulaires 10 qui permettent leur assemblage à d'autres tubes, ainsi qu'on le verra ultérieurement.

En l'occurrence, certains de ces manchons 10 sont orientés de manière à permette d'assembler aisément, par exemple par soudage, une croix 2 qui, comme on le voit ici, est formée d'un élément central 200 en forme de croix auquel sont assemblés quatre tubes 20.

Bien entendu, l'écartement entre les supports 5 aura été calculé à l'avance pour que le montage de la face F1 se fasse au mieux.

Une fois cet assemblage effectué au sol, on solidarise la face F1 aux deux supports 5 en verrouillant les moyens de fixation 53.

Cependant, il est également possible de solidariser la croix 2 aux deux supports, avant son assemblage aux tubes 1. Ceci permet de bien maintenir la croix en place avant les opérations de soudage.

La deuxième étape consiste à répéter ce qui vient d'être décrit pour constituer une deuxième face F2 identique à la première, en utilisant deux autres supports.

Pour la suite de la mise en oeuvre du procédé selon l'invention, on peut faire usage du dispositif ou "plateau" qui est représenté à la figure 6.

Celui-ci est référencé 6 et comporte quatre traverses parallèles 60 sur lesquels prennent appui, à angle droit, des rails ou poutres 61 à section en forme de I.

De ces rails s'élèvent deux paires de plots verticaux 62, également en forme de poutres à sections en forme de H, qui sont prévus pour pouvoir coulisser à la demande entre deux rails 61.

Les plots d'une même paire se font face et leur écartement est choisi de manière à ce qu'il soit égal à l'écartement entre deux manchons 52 des supports 5 décrits plus haut.

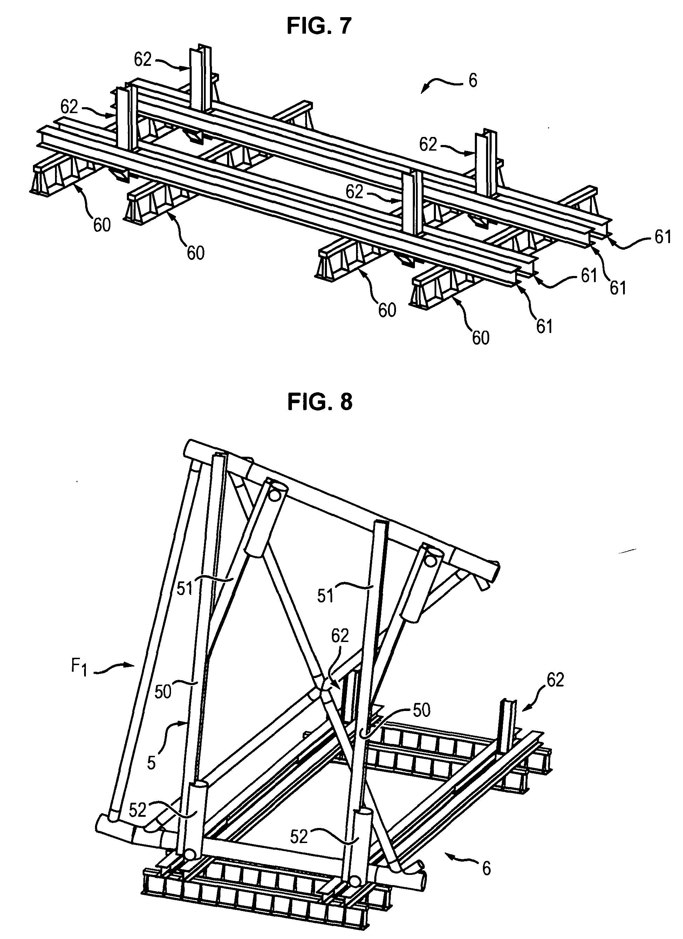

L'étape suivante consiste alors à positionner, comme montré à la figure 7, une première face F₁, en emmanchant les manchons 52 de cette première face F₁ sur les plots 62 précités.

Cette manipulation peut bien entendu être faite à l'aide d'une grue ou autre moyen de levage, en fonction du poids de la face.

On procède alors à la mise en place de la seconde face F₂, comme montré à la figure 8, exactement en regard de la précédente, sur la seconde paire de plots 62.

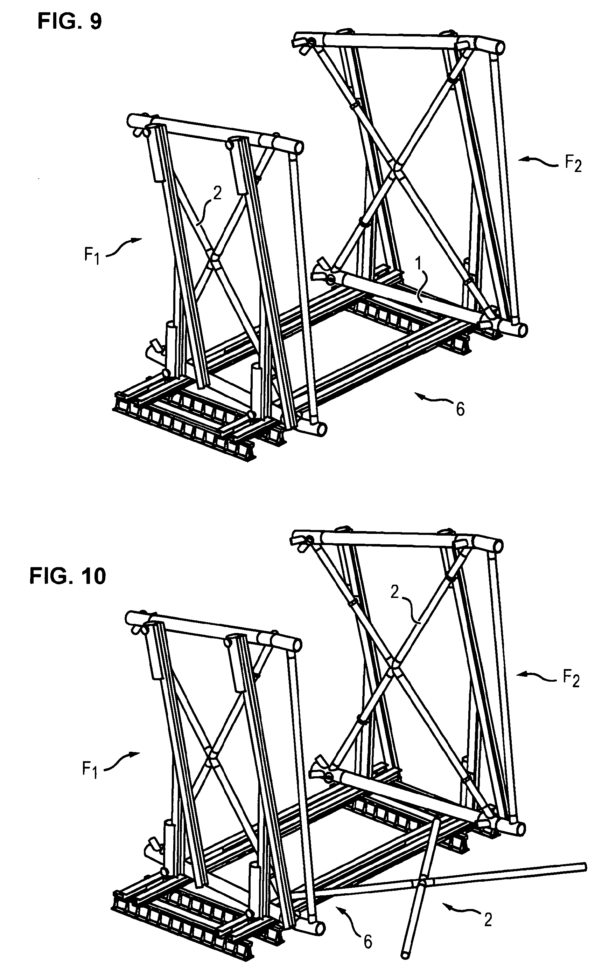

On peut alors, selon une quatrième étape du procédé, mettre en place une croix et l'assembler aux tubes inférieurs 1 des deux faces F1 et F2 érigées verticalement, de manière à obtenir un sous-ensemble SE constitué de trois faces F1, F2 et F3 (figure 9).

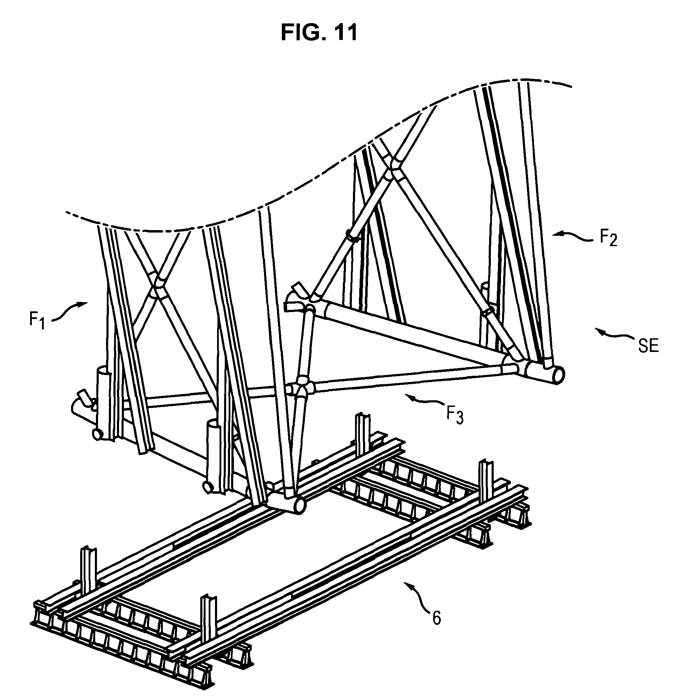

Ce sous ensemble peut être alors soulevé de terre (figure 10), par un moyen adapté tel qu'une grue, et il est ensuite retourné sur lui-même, comme montré à la figure 11 par la flèche f de manière à ce que la derniere croix 2 mise en place précédemment occupe la partie supérieure du sous-ensemble SE ainsi constitué.

Bien entendu, on peut utiliser plusieurs grues ou tout autre moyen de manutention adapté.

On manipule alors ce sous-ensemble SE de manière à ce que les manchons 52 opposés à la face F3 viennent en place sur les plots 62 de l'élément 6.

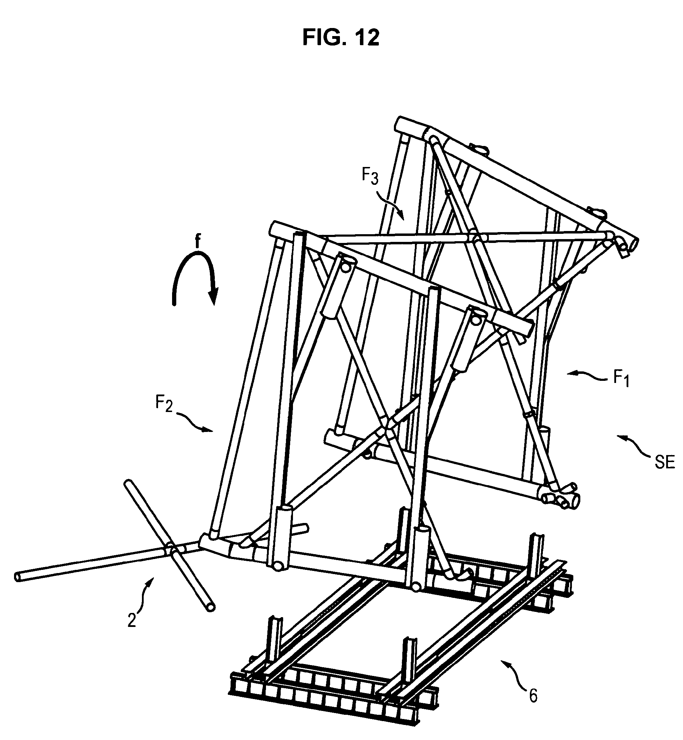

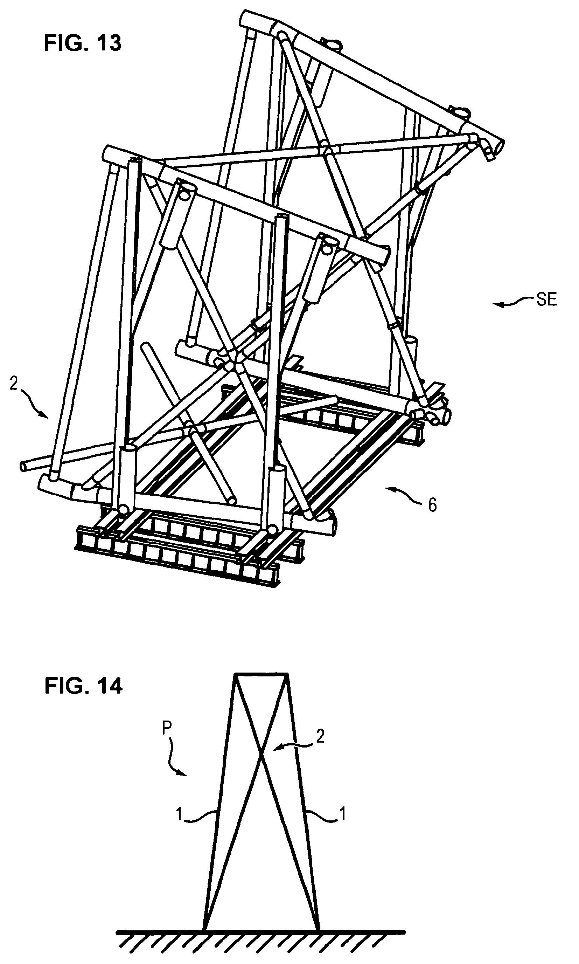

On réalise alors la mise en place et l'assemblage de la dernière croix 2 (figures 12 et 13).

Ainsi, on parvient à la constitution d'un tronçon formé de quatre faces.

Bien entendu, ces opérations sont réitérées pour chacun des tronçons qui forment le pylône et la dernière opération consiste à les fixer les uns aux autres.

Comme montré à la figure 14, lorsque le pylône présente une hauteur peu importante, un seul tronçon peut constituer ce pylône.

Dans l'exemple représenté ici, chaque face comporte une seule croix. Il est toutefois possible qu'il y en ait plusieurs. Dans cette hypothèse, l'étape a) du procédé selon l'invention comprend l'assemblage de deux tubes 1 et de plusieurs croix 2.

Il apparait de ce qui précède que la quasi-totalité des opérations nécessaires à la fabrication d'un tronçon peuvent être réalisées au niveau du sol, ce qui particulièrement sécurisant et permet de gagner en temps de montage.

## Revendications

1. Procédé de fabrication d'un pylône (P) qui s'inscrit dans un tronc de pyramide (R) droit à base carrée ou rectangulaire, et qui est formé d'un seul et unique tronçon ou de plusieurs tronçons (T₁ T₂, T₃) assemblés les uns aux autres, chaque tronçon, également en forme de tronc de pyramide, étant formé de tubes (1) matérialisant les arêtes (A) dudit tronc de pyramide, ces tubes (1), qui sont inclinés par rapport à la verticale d'un angle α₁ étant reliés deux à deux par une croix (2), **caractérisé par le fait qu'**il comprend, pour la réalisation d'un tronçon, la mise en oeuvre des étapes suivantes :
a) assembler, dans un plan généralement horizontal, deux tubes (1) et au moins une croix (2), pour former une "première face" (F₁) du tronc de pyramide (R) ;
b) répéter l'étape a) pour former une "deuxième face" (F₂) du tronc de pyramide (R) ;
c) positionner verticalement, selon l'angle d'inclinaison dudit tronc par rapport à la verticale, et exactement en regard l'une à l'autre, les première et deuxième faces (F₁, F₂) obtenues aux étapes a) et b) ;
d) positionner et assembler une croix (2) avec les tubes (1) inférieurs des deux faces (F₁, F₂) érigées verticalement, de manière à obtenir un sous-ensemble (SE) constitué de trois faces ;
e) procédé au levage et au retournement sur lui-même dudit sous-ensemble (SE) obtenu à l'étape d), de sorte que les deux tubes (1) non encore réunis par une croix (2) s'étendent en position basse ;
f) procéder à la mise en place et à l'assemblage de ladite croix (2) sur lesdits tubes (1) de manière à constituer la quatrième face du tronçon.

2. Procédé selon la revendication 1 dans lequel ledit pylône est constitué de plusieurs tronçons distincts (T₁, T₂, T₃), **caractérisé par le fait que** l'on réitère l'ensemble des étapes précitées de manière à obtenir plusieurs tronçons que l'on assemble les uns aux autres pour former ledit pylône (P).

3. Procédé selon la revendication 2, **caractérisé par le fait que** lors de la fabrication du tronçon inférieur (P₁), on met en place entre chaque paire de tubes (1), non loin de leur base, une traverse (3) de jonction et de rigidification.

4. Dispositif de fabrication d'un pylône (P) qui s'inscrit dans un tronc de pyramide (R) droit à base carrée ou rectangulaire, et qui est formé d'un seul et unique tronçon ou de plusieurs tronçons (T₁, T₂, T₃) assemblés les uns aux autres, chaque tronçon, également en forme de tronc de pyramide, étant formé de tubes (1) matérialisant les arêtes (A) dudit tronc de pyramide, ces tubes (1), qui sont inclinés par rapport à la verticale d'un angle α₁ étant reliés deux à deux par une croix (2), **caractérisé par le fait qu'**il comporte deux paires de supports identiques (5), chaque support comportant un premier (50) et un second (51) éléments droits, fixés l'un à l'autre, qui forment fun par rapport à l'autre un angle égal audit angle α₁, ces deux paires de supports étant destinées à recevoir respectivement l'une ou l'autre de ladite première (F1) et ladite deuxième faces (F2), et que l'extrémité libre desdits éléments (50, 51) porte un manchon (52) qui s'étend parallèlement à l'élément associé.

5. Dispositif selon la revendication 4, **caractérisé par le fait que** les éléments (50, 51) dudit support comportent de moyens de fixation (53) des tubes (1).

6. Dispositif selon l'une des revendications 4 ou 5, **caractérisé par le fait qu'**il comporte un plateau (6) sensiblement plan, à la surface duquel s'élèvent au moins deux paires de plots (62) perpendiculaires audit plateau et sur lesquels lesdits manchons sont aptes à être positionnés.

7. Dispositif selon la revendication 6, **caractérisé par le fait qu'**il comporte des rails (61) le long desquels lesdits plots (62) sont aptes à être déplacés, si nécessaire, pour s'adapter à la dimension du pylône.

## Patentansprüche

1. Verfahren zur Herstellung eines Masts (P), der in einem geraden Pyramidenstumpf (R) mit quadratischer oder rechteckiger Basis integriert ist und der von einem alleinigen und einzigen Stumpf oder von mehreren Stümpfen (T₁, T₂, T₃) gebildet ist, die miteinander verbunden sind, wobei jeder Stumpf, der ebenfalls pyramidenstumpfartig ist, von Rohren (1) gebildet ist, welche die Kanten (A) des Pyramidenstumpfs bilden, wobei diese Rohre (1), die in Bezug zur Vertikalen in einem Winkel α₁ geneigt sind, jeweils zu zweit mit einem Kreuz (2) verbunden sind, **dadurch gekennzeichnet, dass** es für die Herstellung eines Stumpfs die Durchführung der folgenden Schritte umfasst:
a) Verbinden, in einer allgemein horizontalen Ebene, von zwei Rohren (1) und mindestens einem Kreuz (2), um eine "erste Seite" (F₁) des Pyramidenstumpfs (R) zu bilden;
b) Wiederholen von Schritt a), um eine "zweite Seite" (F₂) des Pyramidenstumpfs (R) zu bilden;
c) vertikales Positionieren, gemäß dem Neigungswinkel des Stumpfs in Bezug zur Vertikalen und genau gegenüber, der ersten und zweiten Seite (F₁, F₂) aus den Schritten a) und b) ;
d) Positionieren und Verbinden eines Kreuzes (2) mit den unteren Rohren (1) der zwei vertikal aufgerichteten Seiten (F₁, F₂), um eine Unterbaugruppe (SE) zu erhalten, die von drei Seiten gebildet ist;
e) Aufrichten und Umdrehen der Unterbaugruppe (SE) aus Schritt d) um sich selbst, so dass sich die zwei noch nicht von einem Kreuz (2) verbundenen Rohre (1) in niedriger Stellung erstrecken;
f) Platzieren und Verbinden des Kreuzes (2) auf den Rohren (1), um die vierte Seite des Stumpfs zu bilden.

2. Verfahren nach Anspruch 1, wobei der Mast von mehreren unterschiedlichen Stümpfen (T₁, T₂, T₃) gebildet ist, **dadurch gekennzeichnet, dass** alle vorgenannten Schritte wiederholt werden, um mehrere Stümpfe zu erhalten, die miteinander verbunden werden, um den Mast (P) zu bilden.

3. Verfahren nach Anspruch 2, **dadurch gekennzeichnet, dass** bei der Herstellung des unteren Stumpfs (P₁) zwischen jedem Paar von Rohren (1) unweit ihrer Basis eine Verbindungs- und Versteifungstraverse (3) platziert wird.

4. Vorrichtung zur Herstellung eines Masts (P), der in einem geraden Pyramidenstumpf (R) mit quadratischer oder rechteckiger Basis integriert ist und der von einem alleinigen und einzigen Stumpf oder von mehreren Stümpfen (T₁, T₂, T₃) gebildet ist, die miteinander verbunden sind, wobei jeder Stumpf, der ebenfalls pyramidenstumpfartig ist, von Rohren (1) gebildet ist, welche die Kanten (A) des Pyramidenstumpfs bilden, wobei diese Rohre (1), die in Bezug zur Vertikalen in einem Winkel α₁ geneigt sind, jeweils zu zweit mit einem Kreuz (2) verbunden sind, **dadurch gekennzeichnet, dass** sie zwei Paare identischer Stützen (5) aufweist, wobei jede Stütze ein erstes (50) und ein zweites (51) gerades Element aufweist, die aneinander befestigt sind, die zueinander einen Winkel bilden, der dem Neigungswinkel α₁ entspricht, wobei diese zwei Paare von Stützen bestimmt sind, jeweils die eine oder die andere der ersten (F1) und der zweiten Seite (F2) aufzunehmen, und dass das freie Ende der Elemente (50, 51) eine Hülse (52) trägt, die sich parallel zum zugeordneten Element erstreckt.

5. Vorrichtung nach Anspruch 4, **dadurch gekennzeichnet, dass** die Elemente (50, 51) der Stütze Befestigungsmittel (53) der Rohre (1) aufweisen.

6. Vorrichtung nach einem der Ansprüche 4 oder 5, **dadurch gekennzeichnet, dass** sie eine etwa ebene Platte (6) aufweist, auf deren Oberfläche sich mindestens zwei Paare von Stiften (62) erheben, die senkrecht zur Platte sind und auf denen die Hülsen positionierbar sind.

7. Vorrichtung nach Anspruch 6, **dadurch gekennzeichnet, dass** sie Schienen (61) aufweist, entlang derer die Stifte (62) verlagerbar sind, sofern notwendig, um sich an die Größe des Masts anzupassen.

## Claims

1. A method for manufacturing a pylon (P) which is included in a straight frustum (R) of pyramid with a square or rectangular base, and which is formed of a single unique segment or of several segments (T₁, T₂, T₃) assembled to each other, each segment, also as a frustum of pyramid, being formed with tubes (1) materializing the edges (A) of said frustum of pyramid, these tubes (1) which are tilted with respect to the vertical of an angle α₁ pairwise connected by a cross (2), **characterized by** the fact that it comprises, for producing the segment, the application of the following steps:
a) assembling, in a generally horizontal plane, two tubes (1) and at least one cross (2), so as to form a "first face" (F₁) of the frustum of pyramid (R);
b) repeating step a) so as to form a "second face" (F₂) of the frustum of pyramid (R);
c) vertically positioning, according to the tilt angle of said frustum relatively to the vertical, and exactly facing each other, the first and second faces (F₁, F₂) obtained in steps a) and b);
d) positioning and assembling a cross (2) with the lower tubes (1) of both faces (F₁, F₂) erected vertically, so as to obtain a sub-assembly (SE) consisting of three faces;
e) proceed with raising and turning over on itself said sub-assembly (SE) obtained in step d), so that both tubes (1) not yet joined up by a cross (2) extend in a low position;
f) proceed with setting into place and assembling said cross (2) on said tubes (1) so as to form the fourth face of the segment.

2. The method according to claim 1, wherein said pylon consists of several distinct segments (T₁, T₂, T₃), **characterized by** the fact that the whole of the aforementioned steps is repeated so as to obtain several segments which are assembled together in order to form said pylon (P).

3. The method according to claim 2, **characterized by** the fact that during the manufacturing of the lower segment (P₁), a junction and stiffening cross-bar (3) is set into place between each pair of tubes (1) not far from their base.

4. A device for manufacturing a pylon (P) which is included in a straight frustum (R) of pyramid with a square or rectangular base, and which is formed of a single unique segment or of several segments (T₁, T₂, T₃) assembled to each other, each segment, also as a frustum of pyramid, being formed with tubes (1) materializing the edges (A) of said frustum of pyramid, these tubes (1) which are tilted with respect to the vertical of an angle α₁ pairwise connected by a cross (2), **characterized by** the fact that it includes two pairs of identical supports (5), each support including first (50) and second (51) straight elements, attached to each other and which form relatively to each other an angle equal to said angle α₁, both of these pairs of supports being intended to respectively receive either one of said first (F₁) and said second (F₂) faces, and that the free end of said elements (50, 51) bears a sleeve (52) which extends parallel to the associated element.

5. The device according to claim 4, **characterized by** the fact that the elements (50, 51) of said support include means (53) for attaching the tubes (1).

6. The device according to one of claims 4 or 5, **characterized by** the fact that it includes a substantially planar plate (6), at the surface of which rise at least two pairs of studs (62) perpendicular to said plate and on which said sleeves are able to be positioned.

7. The device according to claim 6, **characterized by** the fact that it includes rails (61) along which said studs (62) are able to be moved, if required, in order to adapt to the size of the pylon.
